# EUROPEAN PATENT SPECIFICATION

(11) **EP 0 787 778 B1**
(45) Date of publication and mention of the grant of the patent: **05.06.2002**
(21) Application number: 96304877.2
(22) Date of filing: 02.07.1996
(51) Int. Cl.: C09D 11/00

(54) **Polymeric additives for the elimination of ink jet aerosol generation**
Polymerzusätze zur Entfernung von Aerosol, das während des Tintenstrahldruckens entsteht
Additifs polymériques pour l'élimination d'aérosol generé pendant l'impression par jet d'encre

(30) Priority: 06.12.1995 US 567973
(43) Date of publication of application: 06.08.1997
(73) Proprietor: Hewlett-Packard Company, A Delaware Corporation, Palo Alto, CA 94304 (US)
(72) Inventor: Branham, Bradley B., Portland, Oregon 97210 (US)
(74) Representative: Colgan, Stephen James

(56) References cited:
- EP-A- 0 525 994
- CH-A- 660 750
- GB-A- 2 031 448
- US-A- 4 791 165
- PATENT ABSTRACTS OF JAPAN vol. 018, no. 647 (C-1283), 8 December 1994 & JP 06 248208 A (CANON INC), 6 September 1994,

## Description

### TECHNICAL FIELD

The present invention relates to ink compositions employed in ink-jet printing and, more particularly, to the reduction of aerosol generation in ink-jet printing by including polymeric additives in ink-jet ink compositions.

### BACKGROUND ART

Ink-jet printing is a non-impact printing process in which droplets of ink are deposited on print media, such as paper, transparency film, or textiles. Low cost and high quality of the output, combined with relatively noise-free operation, have made ink-jet printers a popular alternative to other types of printers used with computers. Essentially, ink-jet printing involves the ejection of fine droplets of ink onto print media in response to electrical signals generated by a microprocessor.

There are two basic means currently available for achieving ink droplet ejection in ink-jet printing: thermally and piezoelectrically. In thermal ink-jet printing, resistive heating is used to vaporize the ink, which is expelled through an orifice in the ink-jet pen toward the print medium. Such printers are provided with a plurality of orifices, each orifice being associated with a resistor. A microprocessor selects the appropriate resistor for ink ejection and directs an electrical current to that resistor to achieve resistive heating and the consequential ejection of ink through the orifice associated with the selected resistor. The pattern of particular resistor/orifice pairs selected for ink ejection by the microprocessor determines the configuration of the alphanumeric character, area fills, or other pattern that is printed on the paper. In piezoelectric ink-jet printing, the ink droplets are ejected due to the vibrations of piezoelectric crystals, again, in response to electrical signals generated by a microprocessor.

Regardless of type of energy employed to eject ink from an ink-jet printer, a common problem experienced in ink-jet printing is the disintegration of an ejected droplet of ink such that certain portions of the original ink droplet do not reach the intended position on the print medium. More specifically, it is known that an ink droplet ejected by an ink-jet printer generally has a head portion and a tail portion. The tail portion is susceptible to fragmenting into smaller volumes of ink, termed herein as "breakoff remnants". Certain breakoff remnants do not thereafter deposit at the intended destination on the print medium along with the head portion and intact tail portion of the ejected ink droplet. Rather, certain breakoff remnants are small enough such that their trajectory is altered by aerodynamic drag. Breakoff remnants that do not reach their intended destination on the print medium due to aerodynamic drag are known collectively as "aerosol".

Not all breakoff remnants are encompassed by the term "aerosol". Rather, a breakoff remnant must be sufficiently small to be materially affected by aerodynamic drag, and the fragmentation of the tail creating the breakoff remnant must have occurred sufficiently far from the print medium destination to provide an opportunity for aerodynamic drag to alter its flight path. Theoretically, the size of the breakoff remnants and the time at which breakoff occurs are largely affected by the interaction between the inertial forces at work, the viscosity of the ink, and the surface tension of the ink.

The generation of aerosol in ink-jet printing is undesirable because control of the position of ejected ink on the print medium is effectively wrested from the printer microprocessor and diverted to random aerodynamic forces. Aerosol negatively affects print quality by diminishing the amount of ink directed to create a particular alphanumeric character, area fill, or other pattern. Moreover, the breakoff remnants making up aerosol may land on a portion of the print medium intended to remain blank, thereby adversely affecting print quality.

Accordingly, a need exists for a means to substantially reduce or eliminate the formation of aerosol in ink-jet printing. The means employed must not adversely affect print quality and must be easily implemented.

Several water-based ink-jet ink compositions comprising polymer additives are known in the art. Swiss patent application CH-A-660 750 discloses water-based inks comprising poly(vinylpyrrolidone). The inks are stated to be physiologically acceptable and can be used for printing onto pharmaceutical products such as tablets. Japanese patent application JP-A-62048208 discloses ink compositions containing 0.01-10wt.% of at least one water-soluble polymeric compound. The ink compositions are stated to prevent feathering and have excellent colour developing properties and fixability. UK patent application GB-A-2031448 discloses water-based ink compositions comprising 1 to 40 wt.% of a poly(vinylpyrrolidone) resin. The ink compositions are free of an electrolyte and are stated to form stable nozzle jet particles with a high deflecting sensitivity over-long paths. European patent application EP-A-0525994 discloses water-based ink compositions comprising a polyether-type polymer. The ink compositions are stated to have suitable properties for use in ink-jet printers, such as uniform and large drop sizes, reduced drop satellites and acceptable latency, surface tension and viscosity values. Finally, US-A-4791165 discloses water-based ink compositions comprising 0.001 to 10 wt.% of a polymer blend with both charged and uncharged units. The ink compositions are stated to prevent evaporation of the carrier fluid while promoting proper firing.

The present invention provides an ink-jet ink composition comprising at least one dye, an aqueous-based vehicle, and at least one polymer selected from the group consisting of polyacrylamides having a molecular weight within the range of 10,000 to 5,000,000, polyvinylpyrrolidones having a molecular weight within the range of 3,000 to 1,000,000, and mixtures thereof, wherein said at least one polymer is present in said ink-jet ink composition within the range of 5 to less than 10 ppm w/w.

The present invention further provides a method of reduced aerosol ink-jet printing comprising: formulating an ink-jet composition according to the present invention; and printing said ink-jet composition on a print medium (28) by means of an ink-jet pen.

The polymer component serves to increase the extensional viscosity as well as the surface tension of the ejected ink so that the tail portion is more apt to remain intact. Moreover, even if tail fragmentation nevertheless occurs, the polymer component actually serves to move the point of fragmentation farther from the head, thereby delaying fragmentation such that any breakoff remnants are closer to the print medium when formed. Finally, any ink that does break away from the tail in the practice of the invention likely forms satellite drops having sufficient size such that their trajectories are not dominated by aerodynamic forces. In other words, the incorporation of a polymer in an ink-jet composition battles the formation of aerosol in two ways: (1) it deters fragmentation; (2) in the event of fragmentation, it maximizes the size of the satellite droplets and delays their formation.

The ink composition and method of the invention may be used with a variety of ink-jet printers such as continuous, piezoelectric drop-on-demand printers and thermal or bubble jet drop-on-demand printers. The reduction of aerosol formation achieved in the practice of the invention improves the print quality achievable with ink-jet printers.

In the accompanying drawings:-

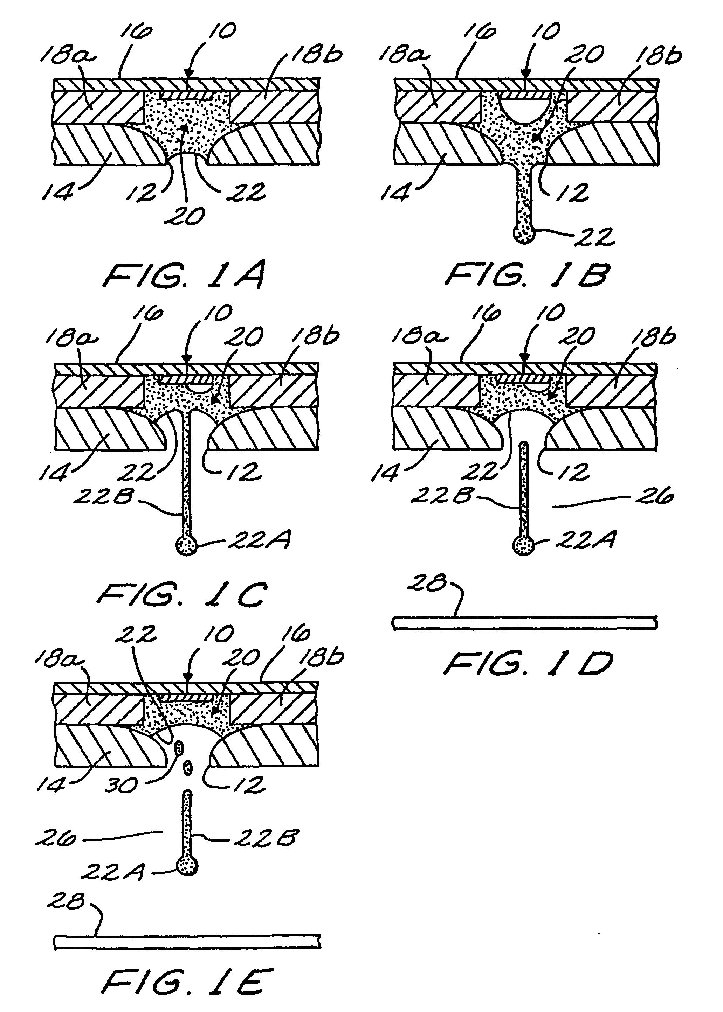

FIGS. 1A-1E are cross-sectional views of a firing chamber in a thermal ink-jet pen, depicting the time sequence of events of ink being fired and showing the development of a tail portion that may fragment into breakoff remnants collectively known as aerosol.

Aerosol formation is substantially reduced in the practice of the present invention by incorporating a polymer component into ink-jet ink compositions. The polymer component is employed in the present inks at a concentration ranging from 5 to less than 10 ppm. Within this concentration range, the polymer serves to prevent or delay the formation of aerosol breakoff remnants. Inks formulated in accordance with the invention may be printed by an ink-jet printer onto various forms of print media, including paper, transparencies, and textiles. Moreover, the present inks may be suitably employed in any ink-jet printer; however, they are particularly useful in thermal ink-jet printers.

FIG. 1A through 1E depict the time sequence of what is believed to be happening to generate breakoff remnants that collectively form aerosol when thermal ink-jet printing. The Figures depict a side elevational view of one firing resistor 10 and associated orifice 12 in a orifice plate 14. The resistor 10 is supported on a substrate 16. A barrier layer 18 defines the firing chamber 20 in which the resistor 10 resides, and is seen to the left and right of the resistor, forming two walls 18a and 18b. A further barrier wall (not shown) is "above" the plate of the Figure; the three barrier walls 18a, 18b, and the further barrier wall define three sides of the firing chamber 20, leaving a fourth wall open. Ink 22 enters the firing chamber 20 from an ink feed slot (not shown), which is in slot form and supplies ink to a plurality of resistors on either side (one side is the "even" side, and the other side is the "odd" side) from a reservoir (not shown) beneath the substrate 16. The ink feed slot fluidically communicates with the firing chamber 20 by means of a barrier inlet channel (not shown). The barrier inlet channel connects with the firing chamber 20 through the pen wall and thus is "below" the plane of the Figure.

FIG. 1A depicts ink in the equilibrium state. As the drop is ejected (FIG. 1B), the meniscus of the ink 22 retracts into the firing chamber 20 to make up for the ink that is forming the head 22a and tail 22b (FIG. 1C). FIG. 1D depicts the detachment of the tail 22b from the meniscus of the ink 22 and the movement of the head/tail assembly 26 of the ejected ink toward its destination on the print medium 28. FIG. 1E depicts the fragmentation of the tail 22b of the ejected ink assembly 26, forming breakoff remnants 30. If the breakoff remnants 30 are sufficiently small and are generated long enough before the parent head/tail assembly 26 strikes the print medium 28, the trajectories of the breakoff remnants 30 are controlled by aerodynamic forces and are termed aerosol.

By including a polymer component in ink-jet ink compositions in accordance with the invention, one prevents the formation of aerosol breakoff remnants by increasing the extensional viscosity and surface tension of the ink so that the tail portion is more apt to remain intact. Moreover, even if tail fragmentation nevertheless occurs, the polymer component actually serves to move the point of fragmentation farther from the head, thereby delaying any fragmentation until the ejected ink is closer to the print medium. Finally, the incorporation of a polymer agglomerates the breakaway remnants from the tail into larger satellite drops such that that their trajectories are less likely to be dominated by aerodynamic forces. In sum, the incorporation of a polymer component in an ink-jet ink composition battles the formation of aerosol in basic two ways: (1) by deterring fragmentation; and (2) in the event of fragmentation, by maximizing the size of fragmented particles and delaying their formation.

To effectively decrease the formation of aerosol, the polymer component is employed within the range of 5 to less than 10 ppm. It has been determined experimentally that an ink-jet ink composition employing only 2 ppm of a polyacrylamide is not benefited by reduced aerosol formation. On the other hand, ink-jet ink compositions employing more than 10 ppm of a polyacrylamide exhibit pseudo-plastic effects (i.e., "rubberbanding") that are counterproductive to ink-jet printing. Moreover, precipitation might occur at concentrations higher than 10 ppm.

Viscoelastic polymers suitably employed in the practice of the invention may be any such polymer that increases the extensional viscosity without affecting the sheer viscosity of the ink-jet ink. Examples of classes of suitably employed polymers include, but are not limited to, polyacrylamides and polyvinylpyrrolidones. A mixture of viscoelastic polymers may be employed in the practice of the invention. Thus, a mixture of a polyacrylamide and a polyvinylpyrrolidone may be successfully employed, as well as a mixture of polyacrylamides having different molecular weights. Preferably, the polymer component comprises a mixture of 50 wt% polyacrylamide and 50 wt% polyvinylpyrrolidone or, alternatively, solely comprises a polyacrylamide.

Polyacrylamides suitably employed in the practice of the invention should have a molecular weight within the range of 10,000 and 5,000,000, while polyvinylpyrrolidones so employed should have a molecular weight within the range of 3,000 and 1,000,000. Preferably, the polyacrylamides and polyvinylpyrrolidones employed have molecular weights of approximately 10,000 and 30,000, respectively.

The polymers of the invention may include functional groups such as acetals, ketals, aliphatic aldehydes, aromatic aldehydes, alicyclic aldehydes, heterocyclic aldehydes, amines, amine salts, amino acids, peptides, anilines, heterocyclic amines, azo, azoxy, and diazonium derivatives, carboxylic acids and their derivatives, including esters, lactones, purines, pyrimidines, amides, cyanates, isocyanates, isothiocyanates, thiocyanates, deuterated compounds, ethers, hydrazines, hydrazones, osazones, hydrocarbons, hydroxy-containing compounds, imines, ketones, nitriles, organo-metallic derivatives, sulfur-containing compounds, tyrosines, ureas, thioureas, and quaternary amines. Of the foregoing functional groups, the amine salts, amino acids, peptides, diazonium derivatives, organo-metallic derivatives and quaternary amines contain charged units.

The dye component employed in the present ink-jet ink compositions may be any of the water-soluble dyes used in inks for ink-jet printers. Examples of suitable dyes include, but are not limited to, Food Black 2, Carta Black, Direct Black 19, Direct Black 51, Direct Black 109, Direct Black 154, Direct Blue 86, Direct Blue 199, Direct Red 9, Direct Red 32, Acid Yellow 23, Acid Blue 185, Acid Blue 9, Acid Red 17, Acid Red 52, Acid Red 249, and Reactive Red 180. The concentration of the dye preferably ranges from 0.1 to 7 wt%. Less than 0.1 wt% results in an ink of unacceptable lightness, while greater than 7 wt% results in clogging of the orifices in the ink-jet pen. More preferably, the dye is present within the range of 0.1 to 4 wt% of the ink-jet ink composition. A mixture of dyes may also be employed.

While it is contemplated that the incorporation of polymeric additives will be largely employed to reduce aerosol associated with dye-based ink-jet ink compositions, it is acknowledged that pigment-based inks could also benefit from the practice of the invention.

Preferably, the vehicle of the present ink-jet ink composition comprises, in addition to the viscoelastic polymer component, at least one diol, at least one glycol ether, 2-pyrrolidone, at least one inorganic, salt, and the balance water. More specifically, the vehicle of the present ink-jet ink compositions preferably comprises the following concentrations, expressed as percentage of total ink composition: (a) 3 to 20 wt% of at least one diol; (b) up to 5 wt% of at least one glycol ether; (c) 3 to 9 wt% of 2-pyrrolidone; (d) 0.5 to 5 wt% of at least one component selected from the group consisting of surfactants buffers, and biocides; (e) 3 to 11 wt% of at least one inorganic salt; (f) about 5 to less than 10 ppm of at least one polymer; and (g) the balance water. While the above-described vehicle formulation is preferred, any aqueous-based vehicle suitable for ink-jet ink compositions may be benefited in the practice of the invention.

Examples of diols that may be employed in the preferred ink vehicle include any of, or a mixture of two or more of, such compounds as ethanediols (e.g., 1,2-ethanediol); propanediols (e.g., 1,2-propanediol, 1,3-propanediol, 2-ethyl-2-hydroxymethyl-1,3-propanediol, ethylhydroxypropanediol (EHPD), etc.); butanediols (e.g., 1,3-butanediol, 1,4-butanediol, etc.); pentanediols (e.g., 1,5-pentanediol); and hexanediols (e.g., 1,6-hexanediol, 2,5-hexanediol, etc.). Preferably 1,5-pentanediol and EHPD are employed in the ink vehicle.

The glycol ether component of the ink vehicle may comprise any of the glycol ethers and thioglycols ethers, and mixtures thereof, commonly employed in ink-jet ink compositions. Examples of such compounds include polyalkylene glycols such as polyethylene glycols (e.g., diethylene glycol, triethylene glycol, tetraethylene glycol, etc.) polypropylene glycols (e.g., dipropylene glycol, tripropylene glycol, tetrapropylene glycol, etc.); polymeric glycols (e.g., PEG 200, PEG 300, PEG 400, PPG 400, etc.) and thioglycol. Preferably diethylene glycol is employed in the ink vehicle.

The inorganic salt component preferably employed in the ink vehicle serves to prevent bleed between black ink and color inks, and comprises one or more inorganic salts. The inclusion of an inorganic salt component to control bleed is disclosed in U.S. Patent No. 5,198,023 (entitled "Cationic Dyes with Added Multi-Valent Cations to Reduce Bleed in Thermal Ink-Jet Inks and assigned to the same assignee as the present application). The salts, must, of course, be soluble in the ink in the concentration employed. Suitably employed cations for the inorganic salt include alkaline earth metals of group 2A of the periodic table (e.g., magnesium and calcium); the transition metals of group 3B of the periodic table (e.g., lanthanum); cations from group 3A of the periodic table (e.g., aluminum); and lanthanides (e.g., neodymium). Preferably, calcium and magnesium are employed as cations. Suitably-employed anions associated with calcium include nitrate, chloride, acetate, benzoate, formate, and thiocyanate, while suitable anions associated with magnesium include nitrate, chloride, acetate, benzoate, bromide, citrate, formate, iodide, sulfate, fluoride, tartrate, and thiocyanate. Inorganic salts most preferably employed in the present ink vehicle are the nitrate, chloride, and acetate salts of calcium and magnesium.

Other components that may be employed in the present ink vehicle include surfactants, buffers, biocides, and the like, each of which are commonly employed additives in ink-jet printing.

Surfactants are commonly employed to prevent color to color bleed by increasing the penetration of the inks into the print medium. Any surfactants suitably employed for this purpose in ink-jet ink compositions may be included in the present ink vehicle. Examples of classes of surfactants that might be employed include anionic and nonionic surfactants.

Buffers employed in the present ink vehicle to modulate pH should be organic-based biological buffers, since inorganic buffers would likely precipitate in the presence of the relatively large amount of inorganic salts in the ink composition. Further, the buffer employed should provide a pH ranging from about 6 to 9 for best results. Examples of preferably-employed buffers include Trizma Base, which is available from, for example, Aldrich Chemical (Milwaukee, WI), and 4-morpholine ethane sulfonic acid (MES).

Consistent with the requirements for this invention, various other types of additives may be employed in the ink to optimize the properties of the ink composition for specific applications. For example, as is well known to those skilled in the art, one or more biocides, fungicides, and/or slimicides (microbial agents) may be used in the ink composition as is commonly practiced in the art. Examples of suitably employed microbial agents include, but are not limited to, NUOSEPT® (Nudex, Inc.), UCARCIDE® (Union Carbide), VANCIDE® (RT Vanderbilt Co.), and PROXEL® (ICI America). Additionally, sequestering agents such as EDTA may be included to eliminate deleterious effects of heavy metal impurities. Finally, ammonium nitrate may be included in the ink vehicle to prevent the precipitation of any calcium-containing inorganic salts in the ink which may occur upon exposure of the ink to carbon dioxide in the atmosphere.

The purity of all components is that found in common commercial practice.

Inks formulated with a polymer component in accordance with the present invention exhibit a substantially reduced quantity of aerosol generation without an associated decline in ink-jet print quality. These attributes are demonstrated in the following examples.

### EXAMPLES

To demonstrate the reduction in aerosol achieved in the practice of the invention, four aqueous-based inks were formulated having the following compositions:

**Table 1.**

| Example Ink Formulations. All values are in ppm (w/w). | | | | |
|---|---|---|---|---|
| Component | Ink A | Ink B | Ink C | Ink D |
| DB-TMA dye¹ | 1200 | 1200 | 1200 | 1200 |
| AB9-Na dye² | 2,100 | 2,100 | 2,100 | 2,100 |
| 1,5-pentanediol | 80,000 | 80,000 | 80,000 | 80,000 |
| EHPD | 75,000 | 75,000 | 75,000 | 75,000 |
| 2-pyrrolidone | 75,000 | 75,000 | 75,000 | 75,000 |
| surfactant | 22,500 | 22,500 | 22,500 | 22,500 |
| magnesium nitrate³ | 60,000 | 60,000 | 60,000 | 60,000 |
| Proxel Gel | 2,000 | 2,000 | 2,000 | 2,000 |
| Trizma Base | 2,000 | 2,000 | 2,000 | 2,000 |
| Viscoelastic Polymer | | | | |
| PAA⁴: | 10 | 5 | 0 | 0 |
| PVP⁵: | 0 | 5 | 10 | 0 |

| | | | | |
|---|---|---|---|---|
| ¹ Direct Blue-type dye associated with tetramethylammonium. | | | | |
| ² Acid Blue 9 dye associated with sodium. | | | | |
| ³ Magnesium nitrate hex hydrate. | | | | |
| ⁴ polyacrylamide having molecular weight of about 10,000. | | | | |
| ⁵ polyvinylpyrrolidone having molecular weight of about 30,000 | | | | |

These inks were each separately loaded into the pen of a DeskJet® ink-jet printer, available from Hewlett Packard. The inks were then separately printed onto a paper medium. A laser particle counter was used to measure the distribution of radius size of the ink in terms of particle counts, thereby quantifying the amount of aerosol associated with each ink. Ink D, which did not contain a polymer, had the highest particle count (1,646,630 particles/m³). Inks A, B, and C each showed a reduction in aerosol from that of Ink D. Ink A exhibited a particle count of 675,233 particles/m³; Ink B exhibited a particle count of 698,200 particles/m³; and Ink C exhibited a particle count of 894,320 particles/m³.

Therefore, the inks formulated in accordance with the invention demonstrated a substantial reduction of aerosol formation when compared to an ink containing no polymer component.

Thus, there has been disclosed an ink-jet ink composition exhibiting reduced aerosol generation as well as a method of reducing aerosol generation in ink-jet printing. It will be readily apparent to those skilled in the art that various modifications may be made without departing from the invention as defined by the appended claims.

## Claims

1. An ink-jet ink composition comprising at least one dye, an aqueous-based vehicle, and at least one polymer selected from the group consisting of polyacrylamides having a molecular weight within the range of 10,000 to 5,000,000, polyvinylpyrrolidones having a molecular weight within the range of 3,000 to 1,000,000, and mixtures thereof, wherein said at least one polymer is present in said ink-jet ink composition within the range of 5 to less than 10 ppm w/w.

2. The ink-jet composition of claim 1 wherein said at least one dye is selected from the group consisting of Food Black 2, Carta Black, Direct Black 19, Direct Black 51, Direct Black 109, Direct Black 154, Direct Blue 86, Direct Blue 199, Direct Red 9, Direct Red 32, Acid Yellow 23, Acid Blue 185, Acid Blue 9, Acid Red 17, Acid Red 52, Acid Red 249, and Reactive Red 180.

3. The ink-jet ink composition of claim 1 wherein said ink-jet ink composition comprises:
(a) 0.1 to 4 wt.% of the said at least one dye;
(b) 3 to 20 wt.% of at least one diol;
(c) up to 5 wt.% of at least one glycol ether;
(d) 3 to 9 wt.% of 2-pyrrolidone;
(e) 0.5 to 5 wt.% of at least one component selected from the group consisting of surfactants, buffers, and biocides;
(f) 3 to 11 wt.% of at least one inorganic salt;
(g) 5 to less than 10 ppm w/w of the said at least one polymer; and
(h) the balance water.

4. A method of reduced aerosol ink-jet printing comprising:
(a) formulating an ink-jet composition according to any one of claims 1 to 3; and
(b) printing said ink-jet composition on a print medium (28) by means of an ink-jet pen.

## Patentansprüche

1. Eine Tintenstrahl-Tintenzusammensetzung, die mindestens einen Farbstoff, ein wasserbasiertes Bindemittel und mindestens ein Polymer aufweist, das aus der Gruppe ausgewählt ist, die aus Polyacrylamiden, die ein Molekulargewicht im Bereich von 10.000 bis 5.000.000 aufweisen, Polyvinylpyrrolidonen, die ein Molekulargewicht im Bereich von 3.000 bis 1.000.000 aufweisen, und Gemischen derselben besteht, wobei das mindestens eine Polymer im Bereich von 5 bis weniger als 10 ppm w/w in der Tintenstrahl-Tintenzusammensetzung vorliegt.

2. Die Tintenstrahlzusammensetzung gemäß Anspruch 1, bei der der mindestens eine Farbstoff aus der Gruppe ausgewählt ist, die aus Food Black 2, Carta Black, Direct Black 19, Direct Black 51, Direct Black 109, Direct Black 154, Direct Blue 86, Direct Blue 199, Direct Red 9, Direct Red 32, Acid Yellow 23, Acid Blue 185, Acid Blue 9, Acid Red 17, Acid Red 52, Acid Red 249 und Reactive Red 180 besteht.

3. Die Tintenstrahl-Tintenzusammensetzung gemäß Anspruch 1, wobei die Tintenstrahl-Tintenzusammensetzung folgende Merkmale aufweist:
(a) 0,1 bis 4 Gewichtsprozent des mindestens einen Farbstoffs;
(b) 3 bis 20 Gewichtsprozent mindestens eines Diols;
(c) bis zu 5 Gewichtsprozent mindestens eines Glykolethers;
(d) 3 bis 9 Gewichtsprozent 2-Pyrrolidon;
(e) 0,5 bis 5 Gewichtsprozent mindestens einer Komponente, die aus der Gruppe ausgewählt ist, die aus oberflächenaktiven Substanzen, Puffern und Bioziden besteht;
(f) 3 bis 11 Gewichtsprozent mindestens eines anorganischen Salzes;
(g) 5 bis weniger als 10 ppm w/w des mindestens einen Polymers; und
(h) als Rest Wasser.

4. Ein Verfahren zum Tintenstrahldrucken mit verringertem Aerosol, das folgende Schritte aufweist:
(a) Formulieren einer Tintenstrahlzusammensetzung gemäß einem der Ansprüche 1 bis 3; und
(b) Drucken der Tintenstrahlzusammensetzung auf einem Druckmedium (28) mittels eines Tintenstrahlstiftes.

## Revendications

1. Composition d'encre pour impression par jet d'encre comprenant au moins un colorant, un véhicule à base aqueuse et au moins un polymère choisi dans le groupe formé par les polyacrylamides ayant une masse moléculaire dans la gamme de 10 000 à 5 000 000, des polyvinylpyrrolidones ayant une masse moléculaire dans la gamme de 3 000 à 1 000 000, et leurs mélanges, dans laquelle ledit au moins un polymère est présent dans ladite composition d'encre pour impression à jet d'encre dans la gamme de 5 à moins de 10 ppm p/p.

2. Composition pour impression par jet d'encre selon la revendication 1, dans laquelle ledit au moins un colorant est choisi dans le groupe formé par Food Black 2, Carta Black, Direct Black 19, Direct Black 51, Direct Black 109, Direct Black 154, Direct Blue 86, Direct Blue 199, Direct Red 9, Direct Red 32, Acid Yellow 23, Acid Blue 185, Acid Blue 9, Acid Red 17, Acid Red 52, Acid Red 249 et Reactive Red 180.

3. Composition d'encre pour impression par jet d'encre, dans laquelle ladite composition d'encre pour impression à jet d'encre comprend :
(a) 0,1 à 4% en poids dudit au moins un colorant ;
(b) 3 à 20% en poids d'au moins un diol ;
(c) jusqu'à 5% en poids d'au moins un éther glycolique ;
(d) 3 à 9% en poids de 2-pyrrolidone ;
(e) 0,5 à 5% en poids d'au moins un composant choisi dans le groupe formé par les tensio-actifs, les tampons et les biocides ;
(f) 3 à 11% en poids d'au moins un sel inorganique ;
(g) 5 à moins de 10 ppm p/p dudit au moins un polymère ; et
(h) de l'eau en complément.

4. Procédé d'impression par jet d'encre avec aérosol réduit consistant à :
(a) formuler une composition pour impression par jet d'encre selon l'une quelconque des revendications 1 à 3 ; et
(b) à imprimer ladite composition pour impression par jet d'encre sur un milieu d'impression (28) au moyen d'un stylo à jet d'encre.
